(19) **Europäisches Patentamt**
**European Patent Office**
**Office européen des brevets**

(11) **EP 3 080 638 B1**

(12) # FASCICULE DE BREVET EUROPEEN

(45) Date de publication et mention de la délivrance du brevet:
**10.01.2018 Bulletin 2018/02**

(21) Numéro de dépôt: **14814692.1**

(22) Date de dépôt: **08.12.2014**

(51) Int Cl.:
***G01S 5/02*** *(2010.01)*

(86) Numéro de dépôt international:
**PCT/EP2014/076927**

(87) Numéro de publication internationale:
**WO 2015/086538 (18.06.2015 Gazette 2015/24)**

(54) **PROCEDE DE GEOLOCALISATION D'UNE FLOTTE D'OBJETS COMMUNICANTS SANS SYSTEME DE TYPE GPS**

VERFAHREN ZUR POSITIONSBESTIMMUNG EINER GRUPPE VON KOMMUNIZIERENDEN OBJEKTEN OHNE GPS-SYSTEM

METHOD FOR GEOLOCATING A FLEET OF COMMUNICATING OBJECTS WITHOUT A GPS-TYPE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2013 FR 1362275**

(43) Date de publication de la demande:
**19.10.2016 Bulletin 2016/42**

(73) Titulaire: **Second Bridge**
**75014 Paris (FR)**

(72) Inventeurs:
• **OTHILY, Jérôme**
**F-75014 Paris (FR)**
• **CRUZ CAMPISTA, Karina**
**CEP 09210-200 Santo Andre, SP (BR)**

(74) Mandataire: **Marconnet, Sébastien**
**Cabinet Sébastien MARCONNET**
**4 Ter Route des Gardes (Bâtiment A)**
**92190 Meudon (FR)**

(56) Documents cités:
**WO-A2-2007/072400     US-A1- 2007 005 292**
**US-A1- 2009 201 850     US-A1- 2013 045 750**

**Description**

L'invention porte sur un procédé de géolocalisation d'une flotte d'objets communicants sans système de type GPS (pour "Global Positioning System" en anglais). L'invention trouve une application particulièrement avantageuse pour localiser des hommes et des équipements situés dans un périmètre circonscrit, mais éventuellement mobile. Par exemple, l'invention pourra être utilisée pour permettre à un groupe d'intervention de se repérer non seulement de manière absolue, mais aussi les uns par rapport aux autres.

Il est connu de réaliser une géolocalisation via une communication entre un dispositif client (l'objet à localiser) et un serveur centralisé (le système géolocalisant l'objet comme par exemple un satellite Géostationnaire). Le système GPS procède de cette façon.

Toutefois, dans le contexte de localisation d'hommes et d'équipements résidants dans un périmètre circonscrit mobile, avec une interdiction d'échanges de données avec l'extérieur, un système avec un serveur centralisé ne permet pas de satisfaire les contraintes du problème présenté précédemment.

Par ailleurs, la centralisation du système opérant la localisation induit la transmission d'un signal selon une structure étoilée (transmission d'un signal entre chaque objet à localiser et le serveur opérant la localisation). Une telle structure de transmission implique de résoudre des problèmes relatifs à l'existence d'obstacles pouvant freiner ou interdire la transmission du signal entre un objet à localiser et le serveur.

En outre, la transmission de données selon une structure étoilée nécessite la présence du serveur pour relayer les données entre chaque objet à localiser, lorsque ces derniers requièrent de connaître la position relative de leurs homologues situés dans le périmètre circonscrit. Le système de localisation basé sur un échange client-serveur de type GPS ne permet pas de répondre à ce besoin lorsque le contexte interdit tout échange avec un point à l'extérieur du périmètre circonscrit contenant tous les objets à localiser.

Les systèmes de localisation traditionnels de type GPS par exemple permettent imparfaitement la localisation des deux points de même latitude et de même longitude mais d'altitudes différentes, rendant ainsi difficile la localisation de deux objets de même coordonnées mais par exemple situés à des étages différents d'un immeuble.

Le document US2007005292 décrit des méthodes à base de règles adaptatives pour résoudre des problèmes de localisation d'un élément dans un réseau de capteurs sans fil.

Le document WO2007072400 décrit un procédé de détermination de l'emplacement de noeuds dans un réseau sans fil.

Le document US2013045750 décrit une technologie de localisation dans un réseau de capteurs sans fil.

Le document US2009201850 divulgue un procédé qui utilise des données en temps codées reçues de chacun des capteurs ou noeuds du réseau pour déterminer la localisation de chacun des capteurs.

L'invention vise à remédier efficacement aux inconvénients des systèmes de géolocalisation existants en proposant un procédé décentralisé de localisation sans échange de données avec un point situé à l'extérieur du périmètre contenant les objets à localiser et indépendamment de l'organisation spatiale de la flotte de points (plane ou tridimensionnelle).

Plus précisément, l'invention concerne un procédé de localisation d'objets communicants constituant une flotte, ledit procédé comportant les étapes suivantes:

i - définir un repère absolu dans lequel seront définis des coordonnées des positions des objets communicants,

- déterminer une position de trois objets communiquant dans ledit repère absolu en,

ii - définissant au moins trois positions connues par leurs coordonnées dans le repère absolu, et

iii - en associant aux trois objets communicants, dits objets de référence, les positions connues définies précédemment,

iv - faire détecter, par au moins un des objets de référence, les deux autres objets de référence,

v - mesurer, par au moins un des objets de référence, la distance de au moins un des objets de référence aux deux autres objets de référence,

vi - mesurer la distance d'au moins deux objets de référence, à un quatrième objet communicant, le lieu géométrique des points distants d'un objet de référence à l'objet à localiser étant appelé orbite de l'objet de référence considéré, et

vii - localiser, par au moins un objet communicant, le quatrième objet communicant à partir des au moins deux orbites précédemment établies et d'au moins une distance parmi les distances séparant les trois objets de référence,

caractérisé en ce qu'une longueur de la flotte est supérieure à la portée de détection des objets communicants, un objet communicant donné échange des données relatives à son identité et des données de localisation avec son environnement immédiat d'objets communicants, les objets situés dans l'environnement immédiat de l'objet donné relayant ensuite lesdites données à l'ensemble des objets communicants situés dans leur environnement immédiat, et ainsi de suite jusqu'à ce que chaque objet communicant de la flotte dispose de la connaissance de tous les objets communicants de la flotte, et en ce que

- au moins un objet communicant parmi les trois objets de référence, dit objet localisant, localise le quatrième objet communicant,
- ledit procédé comportant l'étape de déterminer une trajectoire d'un objet communicant appartenant à la flotte, à partir d'un intervalle d'échantillonnage, défini comme l'intervalle de temps entre un instant initial et un instant final, dans laquelle le temps est échantillonné en M instants au moment desquels sera calculée la localisation de l'objet communicant pour lequel la trajectoire est recherchée,
- l'objet localisant recevant, des objets présents dans sa zone de détection définie par une portée maximale de détection, la connaissance des autres objets de la flotte ainsi que leur position, détermine parmi ceux-ci les objets capables de mesurer leur distance à l'objet dont la trajectoire est à déterminer à l'instant concerné de l'échantillonnage, et choisit au moins deux objets de référence parmi ces objets pour réaliser la localisation de l'objet à localiser, à cet instant d'échantillonnage,
- le choix des au moins deux objets de référence parmi ces objets pour réaliser la localisation de l'objet à localiser, à cet instant d'échantillonnage, est effectué sous contrainte d'une liste d'objets dont l'objet localisant connaît la localisation à l'instant concerné de l'échantillonnage.

Selon une mise en oeuvre, seules les positions, à l'instant de la mise en oeuvre du procédé de localisation du quatrième objet, des objets de référence utilisés pour réaliser la localisation dudit objet sont à définir, les positions desdits objets de référence, avant et/ou après le moment de la localisation de l'objet communicant à localiser, pouvant rester inconnues.

Selon une mise en oeuvre, au moins un objet communicant parmi les trois objets de référence, dit objet localisant, localise le quatrième objet communicant.

Selon une mise en oeuvre, l'objet localisant reçoit, des deux autres objets de référence de géolocalisation, les distances entre l'objet à localiser et chacun de ces deux autres objets de référence de géolocalisation Selon une mise en oeuvre, la localisation est obtenue en calculant l'intersection de au moins deux orbites que peut occuper l'objet à localiser du point de vue de deux objets parmi les trois objets de référence.

Selon une mise en oeuvre, dans le cas d'une flotte d'objets situés dans un plan, une intersection des orbites de deux objets parmi les trois objets de référence est composée de deux points, la sélection du point correspondant à la position de l'objet à localiser étant le point parmi ces deux dont la distance au troisième objet de référence est la plus proche de la valeur d'un rayon de l'orbite de ce troisième objet.

Selon une mise en oeuvre, dans le cas d'une flotte d'objets d'altitudes différentes, un lieu géométrique que l'objet à localiser peut occuper du point de vue de deux objets parmi les trois objets de référence est une sphère, une intersection de ces deux sphères est une nappe, la sélection d'un point dans ladite nappe correspondant à la position de l'objet à localiser étant le point parmi ceux de la nappe dont la distance au troisième objet de référence est la plus proche de la valeur d'un rayon de l'orbite dudit troisième objet de référence.

Selon une mise en oeuvre, les au moins deux orbites parmi les trois orbites calculés sont évaluées avec une incertitude relative, le procédé comporte l'étape de minimiser sous contrainte l'écart entre les distances des points situés dans une intersection de au moins deux orbites par rapport au troisième objet de référence et la valeur prise par la distance de ces points au troisième objet de référence.

Selon une mise en oeuvre, dans le cas d'une flotte d'objets situés dans un plan, une des méthodes de minimisation sous contrainte consiste à calculer une intersection de cercles médian de chaque anneau constituant les positions potentielles occupées par l'objet à localiser, le rayon du cercle médian étant défini comme une moyenne historique de rayons mesurés, ayant écarté des valeurs exceptionnelles.

Selon une mise en oeuvre, les valeurs exceptionnelles sont écartées suivant la méthodologie itérative suivante :

- calculer un rayon moyen absolu à partir des mesures réalisées pour estimer la distance à l'objet à localiser,
- écarter, en tenant compte d'une pondération affectée à chacune des mesures en fonction d'une qualité de signal permettant la mesure associée, les mesures dont les écarts types sont supérieurs à un seuil, et
- recalculer un rayon moyen relatif sur la base des valeurs restantes.

Selon une mise en oeuvre, ledit procédé comporte un processus itératif d'élimination des objets de référence utilisés pour débuter un processus de localisation dynamique de la flotte.

Selon une mise en oeuvre, la localisation d'un cinquième objet communicant est effectuée par le quatrième objet localisé et deux des objets de référence.

Selon une mise en oeuvre, la localisation d'un sixième objet communicant est effectuée à partir d'un seul objet de référence et des quatrième et cinquième objets communicants dont la localisation est connue.

Selon une mise en oeuvre, la localisation des objets communicants subséquents est effectuée par tout ou partie des objets dont les coordonnées sont connues, et qui préférentiellement figurent parmi les objets nouvellement localisés différents des objets de référence initialement utilisés pour débuter le procédé.

Selon une mise en oeuvre, le quatrième objet communicant est localisé à partir de la mesure par seulement deux objets communicants de référence lorsqu'une position potentielle du quatrième objet communicant se trouve à l'extérieur d'une zone de détection définie par une portée maximum de détection des objets communicants de la flotte.

Selon une mise en oeuvre, une longueur de la flotte étant supérieure à la portée de détection des objets communicants, un objet communicant donné échange des données relatives à son identité et des données de localisation avec son environnement immédiat d'objets communicants, les objets situés dans l'environnement immédiat de l'objet donné relayant ensuite lesdites données à l'ensemble des objets communicants situés dans leur environnement immédiat, et ainsi de suite jusqu'à ce que chaque objet communicant de la flotte dispose de la connaissance de tous les objets communicants de la flotte.

Selon une mise en oeuvre, ledit procédé comporte l'étape de déterminer une trajectoire d'un objet communicant appartenant à la flotte, à partir d'un intervalle d'échantillonnage, défini comme l'intervalle de temps entre un instant initial et un instant final, dans laquelle le temps est échantillonné en M instants au moment desquels sera calculée la localisation de l'objet communicant pour lequel la trajectoire est recherchée.

Selon une mise en oeuvre, l'objet localisant recevant, des objets présents dans sa zone de détection définie par une portée maximale de détection, la connaissance des autres objets de la flotte ainsi que leur position, détermine parmi ceux-ci les objets capables de mesurer leur distance à l'objet dont la trajectoire est à déterminer à l'instant concerné de l'échantillonnage, et choisit au moins deux objets de référence parmi ces objets pour réaliser la localisation de l'objet à localiser, à cet instant d'échantillonnage.

Selon une mise en oeuvre, le choix des au moins deux objets de référence parmi ces objets pour réaliser la localisation de l'objet à localiser, à cet instant d'échantillonnage, est effectué sous contrainte d'une liste d'objets dont l'objet localisant connaît la localisation à l'instant concerné de l'échantillonnage.

Selon une mise en oeuvre, une distribution dans le temps des instants d'échantillonnage est linéaire sur l'intervalle et régit la détermination de tous les instants.

Selon une mise en oeuvre, une distribution des instants d'échantillonnage est non-linéaire sur tout ou partie de l'intervalle d'échantillonnage.

Selon une mise en oeuvre, la distribution non-linéaire est définie selon une règle prédéfinie comme par exemple une loi statistique.

Selon une mise en oeuvre, la distribution non linéaire est déterminée dynamiquement par des conditions extérieures telles que des données de mouvement fournies par un accéléromètre de l'objet communicant ou une demande d'établissement de trajectoire plus précise pendant un sous-intervalle d'échantillonnage.

Selon une mise en oeuvre, la trajectoire de l'objet communicant est obtenue suivant une méthode d'interpolation de positions entre les positions déterminées à chaque instant d'échantillonnage.

Selon une mise en oeuvre, le choix de la méthode d'interpolation est établie à partir d'une méthode d'étalonnage consistant à faire suivre à l'objet communicant une trajectoire prédéfinie, calculer ensuite par différentes méthodes d'interpolation et notamment linéaire, polynomiale, logarithmique, sinusoïdale et combinaison de ces dernières des trajectoires interpolées, ainsi que calculer des aires délimitées par deux courbes de trajectoires, à savoir une trajectoire prédéfinie dite trajectoire étalon et l'une des trajectoires interpolées, et à sélectionner la méthode d'interpolation correspondant à la trajectoire interpolée qui fournit l'aire la plus faible dans le calcul précédent.

Selon une mise en oeuvre, les objets communicants peuvent indifféremment initier au moins des demandes de détection et des demandes de mesure de distance et communiquer directement ces informations de détection et de distance.

Selon une mise en oeuvre, les objets communicants peuvent être sollicités indifféremment par n'importe quel objet communicant de la flotte pour communiquer directement une donnée de détection ou de mesure de distance.

L'invention sera mieux comprise à la lecture de la description qui suit et à l'examen des figures qui l'accompagnent. Ces figures sont données à titre illustratif mais nullement limitatif de l'invention.

La figure 1 est une représentation des positions fixes sur lesquelles sont positionnées des objets communicants de référence ;

La figure 2 présente des probabilités de présence de l'objet communicant à localiser lors de la mise en oeuvre du procédé selon la présente invention;

La figure 3 présente la trilatération conduisant à la localisation de l'objet à localiser ;

La figure 4 montre sous forme d'un diagramme les étapes du procédé d'élimination itératif des objets de référence utilisés pour initier la géolocalisation dynamique ;

La figure 5 illustre le procédé de sélection des objets de référence utilisés pour localiser de manière itérative un objet dans un nuage d'objets dont la taille est supérieure à la portée maximale de détection d'un objet ;

Les figures 6a et 6b illustrent les deux méthodes différentes de répartition des instants d'échantillonnage;

La figure 7 illustre la méthode itérative d'établissement des trajectoires de chacun des objets à localiser compris dans un périmètre circonscrit mobile.

Les éléments identiques, similaires ou analogues conservent les mêmes références d'une figure à l'autre.

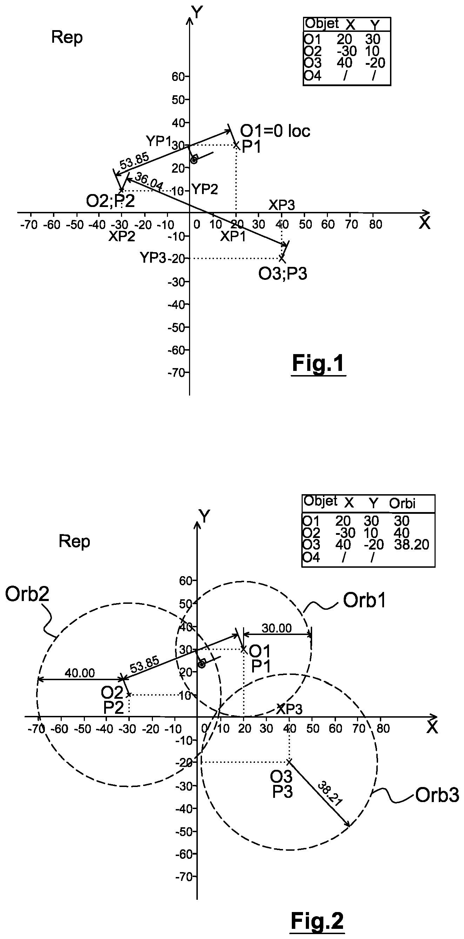

On décrit ci-après, en référence avec les figures 1 à 3, les étapes d'une phase d'initialisation du procédé de localisation d'un objet communicant 04 dans une flotte F d'objets communicants O1-ON, et dont trois objets communicants O1-O3 sont à des positions connues au moment du lancement de la méthode.

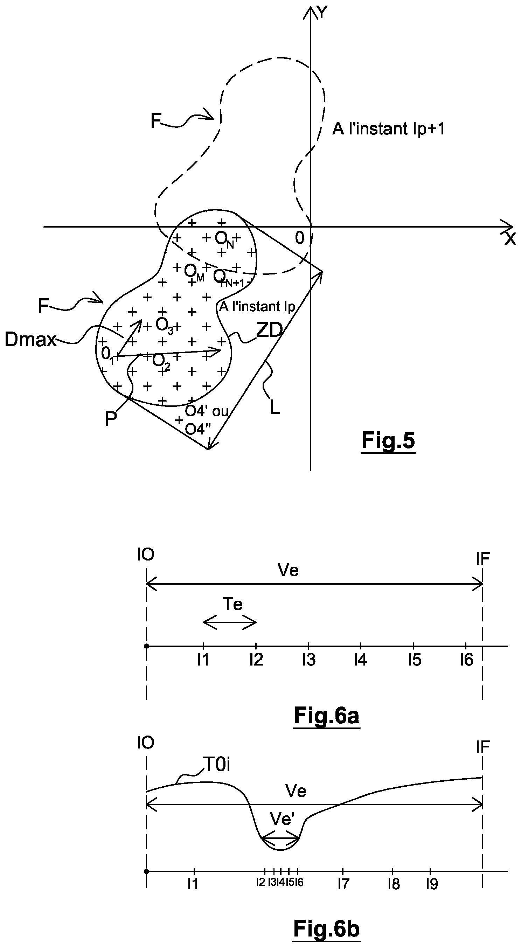

Les objets communicants O1-ON ont une portée maximale de détection P ainsi qu'une distance maximale Dmax mesurable à un autre objet (cf. figure 5). On entend par "portée maximale de détection" la plus grande distance pouvant séparer deux objets capables de se détecter. On entend par "distance maximale Dmax mesurable entre deux objets", la plus grande distance pouvant séparer deux objets capables de mesurer cette distance. Ces deux caractéristiques (portée maximale de détection P et distance maximale Dmax mesurable à un autre objet) pourront être identiques ou différentes pour un même objet Oi. Ces caractéristiques pourront également différer d'un objet à un autre de la flotte F.

Plus précisément, comme visible à la figure 1, on choisit dans un premier temps un repère absolu Rep (O, X, Y) dans lequel seront calculées toutes les positions des objets à localiser. Le système de coordonnées associé à ce repère est cartésien dans notre exemple. Ce système de coordonnées pourra, en variante, être cylindrique, elliptique, ou de toute autre nature.

Le procédé est basé sur la connaissance initiale soit de la localisation sur une carte de trois objets communicants, dit objets de référence O1, O2, O3, au moment du calcul de la géolocalisation de l'objet communicant O4, soit de la donnée des coordonnées de O1, O2, O3 dans le référentiel choisi. Par exemple, les deux processus suivants sont des processus d'initialisation éligibles: dans le cadre d'un premier processus, il est indiqué aux objets O1, O2, O3 l'instant où ils sont correctement positionnés sur une carte en un point facilement reconnaissable tel qu'une porte d'entrée, ou un monument (les cordonnées des objets O1, O2, O3 ne sont pas dans ce cas explicitement connues). Dans le cadre d'un deuxième processus, on renseigne directement dans les objets O1, O2, O3 leurs coordonnées exprimées dans le référentiel choisi.

Ainsi, comme montré à la figure 1, on définit trois positions P1, P2, P3 par leurs coordonnées (XP1, YP1 ; XP2 YP2 ; XP3 YP3) dans le repère absolu Rep(O, X, Y). Le tableau de la figure 1 illustre ainsi les coordonnées des trois objets de référence O1-O3. On positionne l'objet O1 sur la position P1, l'objet O2 sur la position P2, l'objet O3 sur la position P3. Toutefois, cette étape est inutile si le processus d'initialisation est le premier processus précité.

Les objets de référence O1, O2 et O3 se détectent mutuellement, c'est-à-dire que l'objet O1 détecte les objets O2 et O3, l'objet O2 détecte les objets O1 et O3 ; l'objet O3 détecte les objets O1 et O2. En variante, il est également possible qu'un seul ou deux des objets O1-O3 détectent deux ou un seul des autres objets communicants. Au moins un des objets communicants, dit objet localisant Oloc auquel les autres objets transmettent des valeurs de mesure, comporte les dispositifs nécessaires à la fonction de calcul et de mesure de distance afin de localiser individuellement un autre objet. L'objet localisant Oloc pourra par exemple être l'objet O1.

Les objets O1, O2 et O3 mesurent la distance qui les séparent de chacun des deux autres objets communicants, c'est dire que l'objet O1 évalue la distance O1 à O2 et O1 à O3, l'objet O2 évalue la distance O2 à O1 et O2 à O3, et l'objet O3 évalue la distance O3 à O1 et O3 à O2. Ces distances sont transmises à l'objet localisant Oloc=O1. En variante, il est également possible qu'un seul ou deux des objets O1-O3 évalue la distance à deux ou un seul des autres objets communicants.

Les objets O1, O2, et O3 mesurent la distance qui les séparent d'un quatrième objet communicant O4 à localiser (distance O4-O2 ; distance O4-O1 et distance O4-O3). La figure 2 illustre ainsi les trois orbites Orb1, Orb2, Orb3 des positions possibles de l'objet communicant O4. Chaque orbite Orb1, Orb2, Orb3 correspond à toutes les positions géométriques équidistantes de l'objet à localiser O4 par rapport à l'objet de référence considéré O1, O2 ou O3.

Ces orbites Orb1, Orb2, Orb3 des trois objets de référence O1-O3 présentent une forme circulaire si la flotte F d'objets communicants O1-ON présente une configuration plane, c'est à dire que les objets communicants de la flotte F se situent tous à une même altitude, ou une sphère si la flotte F présente une configuration non plane, c'est-à-dire que les objets communicants de la flotte F se situent à des altitudes différentes.

Il est également possible qu'un seul ou deux des objets évaluent la distance à deux ou un seul des autres objets communicants. Par exemple, dans le cadre de la géolocalisation d'un objet situé à la périphérie d'une flotte F d'objets communicants O1-ON, le recours à la distance au troisième objet de référence O3 peut être inutile notamment dans le cas où une des positions potentielles de l'objet O4 à localiser situerait l'objet à localiser à une distance supérieure à la portée de détection P comme cela est expliqué plus en détails ci-après.

On localise ensuite, c'est à dire qu'on produit les coordonnées du quatrième objet communicant O4 dans le repère absolu à partir de tout ou partie des orbites Orb1, Orb2, Orb3 établies précédemment.

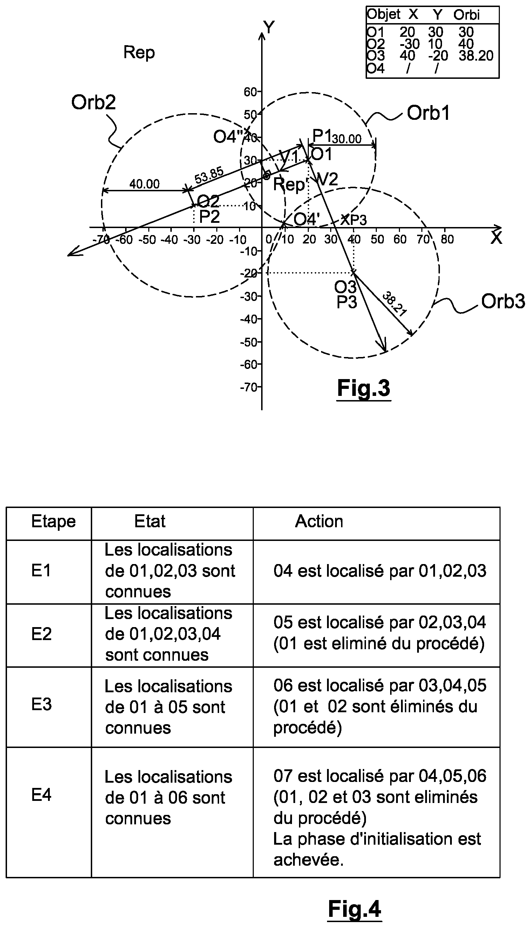

La figure 3 montre le repère relatif Rep' et illustre les deux positions possibles de O4 : O4' et O4". Elles correspondent à l'intersection Orb1 et Orb2 qui sont le lieu géométrique des positions potentielles que peut occuper O4 du point de vue de O1 et O2.

Les coordonnées de O4' et O4" sont exprimées dans un repère relatif Rep' constitué par (O1, V1, V2) où V1 est le vecteur unitaire porté par la droite O1O2 et V2 est le vecteur unitaire normal à V1. Ces coordonnées ($X_{O4'}^{rep'}$, $X_{O4'}^{rep'}$) et ($X_{O4''}^{rep'}$; $X_{O4''}^{rep'}$) sont déterminées à partir des relations suivantes:

$$X_{O4}^{Rep'} = \frac{O_1O_2{}^2 - (O_2O_4{}^2 - O_1O_4{}^2)}{2O_1O_2{}^2}$$

$$Y_{O4'}^{Rep'} = +\sqrt{O_1O_2{}^2 - X_{O4}^{Rep'}}$$

$$Y_{O4''}^{Rep'} = -\sqrt{O_1O_2{}^2 - X_{O4}^{Rep'}}$$

Ces formules éliminent parmi toutes les positions possibles représentées par les orbites Orb1 et Orb2 sauf deux :

$$P_4' = (X_{O4'}^{Rep'}, Y_{O4'}^{Rep'}) \text{ et } P_4'' = (X_{O4''}^{Rep'}, Y'^{Rep'}_{O4''})$$

La méthode consiste alors à éliminer une des positions P'4 ou P4" en supprimant celle des deux dont la distance par rapport à O3 est la valeur la plus éloignée du rayon de l'orbite Orb3.

Les coordonnées de O4 dans le repère absolu Rep se déduisent de ses coordonnées dans le repère Rep' par une formule traditionnelle de changement de repère.

On associe au résultat retourné une incertitude de la mesure qui provient notamment de la précision des mesures des distances $O_1O_2$, $O_1O_4$, $O_2O_4$. Selon la précision souhaitée de la géolocalisation de l'objet O4, la méthode de localisation précitée peut être améliorée de la manière suivante. L'incertitude de la mesure des distances $O_1O_2$, $O_1O_4$, $O_2O_4$ se traduit par un lieu géométrique des positions potentielles de O4 qui prend la forme d'anneau et non plus de cercle, en configuration plane, ou la forme de calotte sphérique et non plus de sphère, dans le cas de la configuration d'une flotte F composée de points à des altitudes différentes.

Conséquemment, l'intersection des lieux géométriques des positions potentielles occupables par l'objet O4 à localiser prend la forme d'une surface plane au lieu de deux points, en configuration plane, ou la forme d'une calotte sphérique au lieu d'une nappe en configuration non plane.

Pour identifier la position réelle de l'objet O4 à localiser, on écarte de l'ensemble des positions admissibles, c'est-à-dire les positions se trouvant à la distance prédéfinie O4O2, O4O1 par rapport auxdits deux objets O1, O2 parmi les trois objets de référence O1, O2, O3 prédéterminé, celles dont la distance à l'objet O4 constitue avec la distance de l'objet O4 audit troisième objet de référence O3 un écart supérieur à un seuil prédéterminé.

Une des méthodes de minimisation sous contrainte consiste ainsi à calculer l'intersection de cercles médian de chaque anneau constituant les positions potentielles occupées par l'objet O4, le rayon du cercle médian étant défini comme la moyenne historique des rayons mesuré, après avoir écarté des valeurs exceptionnelles.

Les valeurs exceptionnelles sont écartées suivant la méthodologie itérative suivante. Un rayon moyen absolu est calculé à partir des mesures réalisées pour estimer la distance à l'objet O4. On écarte, en tenant compte de la pondération affectée à chacune des mesures en fonction de la qualité de signal permettant la mesure associé, les mesures dont les écarts types sont supérieurs à un seuil, et on recalcule un rayon moyen relatif sur la base des valeurs restantes. Ce seuil a une valeur empirique ajustée en fonction des performances historique de la méthode et des conditions extérieures d'utilisation du dispositif, et de la précision attendue. Par exemple, on choisit un seuil de 30%.

La figure 4 illustre la mise en oeuvre de la méthode permettant de s'affranchir des trois objets de référence O1-O3 et d'assurer la localisation itérative de l'ensemble des dispositifs composant la flotte F à partir d'autres objets de référence dont la définition va varier en fonction du temps.

Plus précisément, dans une première étape E1, un quatrième objet O4 est localisé à partir des trois objets communicants O1-O3 dont la localisation est connue à l'instant de l'utilisation du procédé.

Dans une deuxième étape E2, un cinquième objet O5 est localisé à partir de deux objets de référence O2 et O3 et du quatrième objet O4 dont la localisation est connue au moment de la mise en oeuvre du procédé. On a ainsi éliminé un premier objet de référence initial, par exemple l'objet O1.

Dans une troisième étape E3, un sixième objet O6 est localisé à partir d'un seul objet de référence O3 et des quatrième O4 et cinquième O5 objets communicant dont la localisation est connue au moment de la mise en oeuvre du procédé. On a ainsi éliminé deux objets de référence initiaux, par exemple les objets O1 et O2.

Dans une quatrième étape E4, un septième objet communicant O7 est localisé à partir des quatrième O4, cinquième O5 et sixième O6 objets communicants dont la localisation est connue au moment de la mise en oeuvre du procédé. On a ainsi éliminé les trois objets de référence initiaux O1-O3 du procédé.

Il est à noter que la localisation de chaque objet Oi est effectuée à partir de trois objets communicants de référence (pouvant être les objets de référence initiaux au début du procédé ou d'autres objets suite à leur élimination) dont la position a besoin d'être connue uniquement au moment de la localisation de l'objet Oi. Il est donc induit que seules les positions, à l'instant de l'utilisation du procédé de localisation de l'objet Oi, des objets utilisés pour réaliser la localisation de l'objet Oi sont à définir dans le procédé. En particulier, les positions des objets utilisés pour la localisation de l'objet Oi, avant et/ou après le moment de la localisation de l'objet communicant Oi, peuvent être inconnues, par exemple du fait d'une mobilité des objets. Cela ne perturbe pas la mise en oeuvre du procédé.

Par ailleurs, comme cela est illustré à la figure 5, la longueur L de la flotte F, définie par la distance séparant les deux objets communicants O1-ON les plus éloignés l'un par rapport à l'autre de la flotte F, peut être très supérieure à la portée de détection des objets communicants. Pourtant le procédé permet à tous les objets de connaître l'existence, la position, et le cas échéant la direction de tous les autres objets communicants constitutifs de la flotte F, même ceux éloignés d'une distance supérieure à la portée maximale de détection des objets communicants O1-ON par le biais du procédé itératif de communication suivant.

Un objet Oi échange les données relatives à son identité, et des données de localisation avec son environnement immédiat d'objets communicants. L'environnement immédiat est défini par les objets communicants éloignés de l'objet Oi d'une distance inférieure à la portée maximale de détection P et/ou d'une distance inférieure à la distance maximale Dmax mesurable et/ou les objets communicants se trouvant en ligne directe avec Oi, c'est-à-dire les objets communicant qui ne sont pas séparés de l'objet Oi par un obstacle pouvant interférer avec la communication entre deux objets communicants. Les objets situés dans l'environnement immédiat de l'objet Oi relayent ensuite ces données à l'ensemble des objets communicants situés dans leur environnement immédiat et ainsi de suite jusqu'à ce que chaque objet communicant O1-ON de la flotte F dispose de la connaissance de tous les objets communicants de la flotte F, y compris ceux qui ne se situent pas dans son périmètre de détection défini par la portée P.

Par ailleurs, la capacité à évaluer la distance entre deux objets communicants étant limitée par les moyens techniques (portée maximum de détection P), il existe des configurations de flottes F dans lesquelles une des deux positions potentielle de O4' et O4" définies comme les deux intersections de Orb1 et Orb2 se trouve à l'extérieur de la zone de détection ZD définie par la portée P maximum de détection des objets communicants de l'ensemble de la flotte. Dans ce cas, on peut donc localiser O4 à partir de la mesure de distance par rapport à O4 de deux objets communicants de position connue uniquement. Cela s'explique par le phénomène d'adhérence d'un des objets par rapport à la flotte d'objets F.

Par ailleurs, pour réaliser la localisation d'une flotte F composée de N objets communicants, pour une flotte F dont la longueur L est supérieure à la distance maximale de détection Dmax (cf. figure 5), le choix de l'objet localisant Oloc ainsi que de l'objet ou des objets dont les coordonnées sont déjà connus utilisés pour localiser un quatrième objet dans la flotte F, est effectué par itération successive dans la flotte F. Cette itération est gouvernée par la distance maximale mesurable Dmax d'un objet de la flotte F à un autre objet de la flotte F.

Plus précisément, le choix du quatrième objet à localiser par les trois premiers objets (les trois objets de référence) se fait exclusivement parmi les points éloignés au maximum de la distance maximale mesurable Dmax à ces trois premiers objets. Ceci exclut donc, dans le cas d'une flotte ayant une longueur L supérieure à cette distance maximale mesurable Dmax, tous les points à l'extérieur de la zone de détection ZD. Le choix du quatrième objet O4 se fait également avec la contrainte de propager l'information de localisation vers les points les plus éloignés de la flotte F.

De préférence, les objets communicants O1-ON peuvent indifféremment initier au moins des demandes de détection et des demandes de mesure de distance et communiquer directement ces informations de détection et de distance. En particulier, ils peuvent réaliser ces communications d'informations sans faire appel à aucun intermédiaire de communication, comme par exemple des serveurs, des proxys ou des satellites, ou toute autre plate-forme ayant pour objet principal ou secondaire de fédérer ou de relayer ces informations de détection et de distance.

Les objets communicants O1-ON peuvent être sollicités indifféremment par n'importe quel objet O1-ON de la flotte F pour communiquer directement une donnée de détection ou de mesure de distance. En particulier, les objets ont le même statut dans le protocole transactionnel, c'est-à-dire qu'ils peuvent indifféremment être serveur ou client quel que soit le type d'information relayée et notamment celles de détection et de distance.

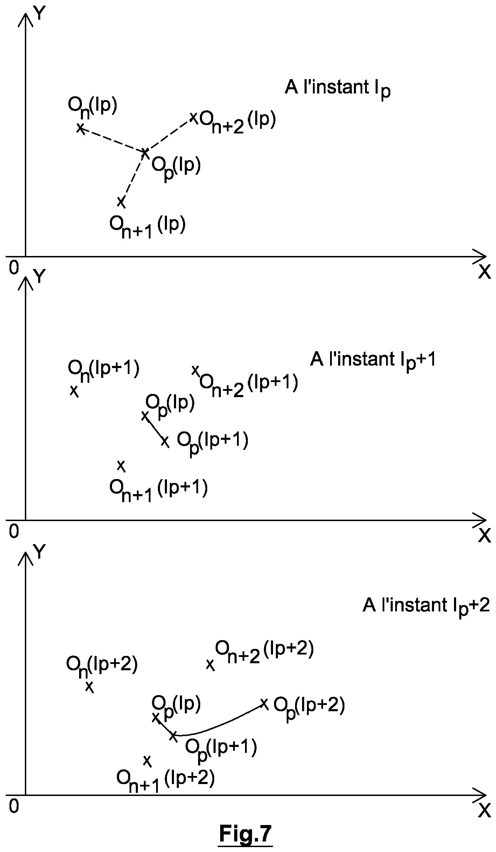

On décrit ci-après, en référence avec les figures 6 et 7, le procédé de détermination d'une trajectoire d'un objet communicant O1-ON appartenant à la flotte F.

A cet effet, on définit un intervalle d'échantillonnage Ve, comme l'intervalle de temps entre un instant initial I0 et un instant final IF, dans laquelle le temps est échantillonné en une collection de m instants li au moment desquels sera calculée la localisation de l'objet communicant pour lequel la trajectoire est recherchée.

La distribution des instants li peut être linéaire sur tout Ve comme illustré à la figure 6a, dans ce cas il existe une période Te d'échantillonnage fixe qui régit la détermination des instants li.

Toutefois, la distribution des instants li pourra être non-linéaire et définie soit selon une règle prédéfinie comme par exemple une loi statistique de distribution de type gaussienne, soit déterminée dynamiquement par une demande extérieure comme par exemple l'interprétation des données de mouvement fournies par un accéléromètre, nécessitant une concentration des instants li dans une sous-intervalle Ve' incluse dans l'intervalle Ve comme illustrée sur la figure 6b. Par exemple, pour une trajectoire TOi d'un objet Oi, la détection d'un changement brusque de direction engendre une demande d'information de localisation dans le sous-intervalle Ve'.

L'objet localisant Oloc reçoit des objets présents dans sa zone de détection la connaissance des autres objets de la flotte F ainsi que la position de ceux déjà localisés à cet instant de l'itération. L'objet localisant Oloc détermine parmi ceux-ci les objets capables de mesurer leur distance à l'objet Oi dont la trajectoire est à déterminer à l'instant concerné de l'échantillonnage. L'objet localisant Oloc choisit au moins deux objets de référence parmi ces objets pour réaliser la localisation de l'objet à localiser Oi, à cet instant d'échantillonnage, sous contrainte de la liste des objets dont l'objet localisant Oloc connaît la localisation à l'instant concerné li de l'échantillonnage.

La figure 7 illustre l'interpolation des positions entre les positions déterminées par la localisation précédente pour un objet Op à trois instants Ip, Ip+1 et Ip+2 successifs. Les positions de l'objet Op sont déterminées à l'aide des trois objets de référence On, On+1, On+2 qui ne correspondent pas forcément aux objets de référence initiaux O1-O3. Pour faciliter la compréhension, les trois objets illustrés sur les figures sont identiques aux trois instants Ip, Ip+1, Ip+2. Toutefois, dans la pratiques, les trois objets de référence utilisés pour la localisation de l'objet Op aux instants successifs Ip, Ip+1, Ip+2 peuvent être différents d'un instant à l'autre.

A l'instant Ip, les objets de référence On(Ip), On+1(Ip), On+2(Ip) localisent l'objet Op(Ip).

A l'instant Ip+1, les objets de référence On(Ip+1), On+1(Ip+1), On+2(Ip+2) localisent l'objet Op(Ip+1).

Un des objets de la flotte F qui peut être un des objets de référence On, On+1, On+2, ou l'objet à localiser lui-même Op ou un autre objet de la flotte F calcule, dans le cas le plus simple, le segment unique de droite passant par les deux points Op(Ip), Op(Ip+1) ou dans le cas plus élaboré, le polynôme de degré M passant par Op(Ip) et Op(Ip+1) et répondant à des contraintes de continuité et, éventuellement, de dérivabilités, imposées par Op(Ip) et Op(Ip+2). Dans ce dernier cas, l'interpolation des segments [Op(Ip), Op(Ip+1)] est effectuée a posteriori des localisations des positions occupées par Op à chacun des m instants Ip.

A l'instant Ip+2, les objets de référence On(Ip+2), On+1 (Ip+2), On+2(Ip+2) localisent l'objet Op(Ip+2). Une interpolation analogue à celle décrite précédemment est réalisée entre les points Op(Ip+1) et Op(Ip+2), ou alors on réalise a posteriori l'interpolation de la trajectoire sur les trois points Op(Ip), Op(Ip+1) et Op(Ip+2), afin d'établir la trajectoire interpolée de l'objet Op.

Le choix de la méthode d'interpolation s'effectuera notamment sur la base d'une méthode d'étalonnage du présent procédé de détermination de trajectoire. Cette méthode d'étalonnage consiste à optimiser le choix de la méthode d'interpolation selon le procédé suivant. Dans un premier temps, on fait suivre à l'objet communicant une trajectoire prédéfinie. On calcule ensuite par différentes méthodes d'interpolation et notamment linéaire, polynomiale, logarithmique, sinusoïdale et combinaison de ces dernières des trajectoires interpolées. On calcule les aires délimitées par les deux courbes, à savoir la trajectoire prédéfinie dite trajectoire étalon et l'une des trajectoires interpolées. L'optimisation consiste à sélectionner la méthode d'interpolation correspondant à la trajectoire interpolée qui fournit l'aire la plus faible dans le calcul précédent.

Bien entendu, la description qui précède a été donnée à titre d'exemple uniquement et ne limite pas le domaine de l'invention dont on ne sortirait pas en remplaçant les détails d'exécution par tous autres équivalents.

**Revendications**

1. Procédé de localisation d'objets communicants (O1-ON) constituant une flotte, ledit procédé comportant les étapes suivantes:

    i - définir un repère absolu (Rep) dans lequel seront définis des coordonnées des positions des objets communicants (O1-ON),

- déterminer une position de trois objets communiquant (O1-O3) dans ledit repère absolu (Rep) en,

ii - définissant au moins trois positions connues (P1-P3) par leurs coordonnées dans le repère absolu (Rep), et

iii - en associant aux trois objets communicants (O1-O3), dits objets de référence, les positions connues définies précédemment (P1-P3),

iv - faire détecter, par au moins un des objets de référence (O1-O3), les deux autres objets de référence,

v - mesurer, par au moins un des objets de référence (O1-O3), la distance de au moins un des objets de référence (O1-O3) aux deux autres objets de référence,

vi - mesurer la distance d'au moins deux objets de référence (O1-O3), à un quatrième objet communicant (O4), le lieu géométrique des points distants d'un objet de référence à l'objet à localiser (O4) étant appelé orbite de l'objet de référence considéré (Orb1-Orb3), et

vii - localiser, par au moins un objet communicant (O1-O3), le quatrième objet communicant (O4) à partir des au moins deux orbites (Orb1-Orb3) précédemment établies et d'au moins une distance parmi les distances séparant les trois objets de référence,

**caractérisé en ce qu'**une longueur (L) de la flotte (F) est supérieure à la portée (P) de détection des objets communicants (O1-ON), un objet communicant donné (Oi) échange des données relatives à son identité et des données de localisation avec son environnement immédiat d'objets communicants, les objets situés dans l'environnement immédiat de l'objet donné (Oi) relayant ensuite lesdites données à l'ensemble des objets communicants situés dans leur environnement immédiat, et ainsi de suite jusqu'à ce que chaque objet communicant de la flotte (F) dispose de la connaissance de tous les objets communicants (O1-ON) de la flotte (F), et **en ce que**

- au moins un objet communicant parmi les trois objets de référence, dit objet localisant (Oloc), localise le quatrième objet communicant (O4),

- ledit procédé comportant l'étape de déterminer une trajectoire d'un objet communicant (Op) appartenant à la flotte, à partir d'un intervalle d'échantillonnage (Ve), défini comme l'intervalle de temps entre un instant initial (I0) et un instant final (IF), dans laquelle le temps est échantillonné en M instants (Ii) au moment desquels sera calculée la localisation de l'objet communicant (Op) pour lequel la trajectoire est recherchée,

- l'objet localisant (Oloc) recevant, des objets présents dans sa zone de détection définie par une portée (P) maximale de détection, la connaissance des autres objets de la flotte ainsi que leur position, détermine parmi ceux-ci les objets capables de mesurer leur distance à l'objet dont la trajectoire est à déterminer à l'instant concerné de l'échantillonnage, et choisit au moins deux objets de référence parmi ces objets pour réaliser la localisation de l'objet à localiser, à cet instant d'échantillonnage (Ii),

- le choix des au moins deux objets de référence parmi ces objets pour réaliser la localisation de l'objet à localiser, à cet instant d'échantillonnage (Ii), est effectué sous contrainte d'une liste d'objets dont l'objet localisant (Oloc) connaît la localisation à l'instant concerné de l'échantillonnage.

2. Procédé selon la revendication 1, **caractérisé en ce que** seules les positions, à l'instant de la mise en oeuvre du procédé de localisation du quatrième objet (O4), des objets de référence utilisés pour réaliser la localisation dudit objet (O4) sont à définir, les positions desdits objets de référence (O1-O3), avant et/ou après le moment de la localisation de l'objet communicant à localiser (O4), pouvant rester inconnues.

3. Procédé selon la revendication 1, **caractérisé en ce que** l'objet localisant (Oloc) reçoit, des deux autres objets de référence de géolocalisation, les distances entre l'objet à localiser (O4) et chacun de ces deux autres objets de référence de géolocalisation.

4. Procédé selon l'une des revendications 1 à 3, **caractérisé en ce que** la localisation est obtenue en calculant l'intersection de au moins deux orbites que peut occuper l'objet à localiser (O4) du point de vue de deux objets parmi les trois objets de référence (O1-O3).

5. Procédé selon la revendication 4, **caractérisé en ce que** dans le cas d'une flotte (F) d'objets situés dans un plan, une intersection des orbites de deux objets (O1, O2) parmi les trois objets de référence (O1-O3) est composée de deux points (O4', O4"), la sélection du point correspondant à la position de l'objet à localiser (O4) étant le point parmi ces deux (O4', O4") dont la distance au troisième objet de référence (O3) est la plus proche de la valeur d'un rayon de l'orbite (Orb3) de ce troisième objet (O3).

6. Procédé selon la revendication 4, **caractérisé en ce que** dans le cas d'une flotte (F) d'objets d'altitudes différentes, un lieu géométrique que l'objet à localiser (O4) peut occuper du point de vue de deux objets (O1, O2) parmi les trois objets de référence (O1-O3) est une sphère, une intersection de ces deux sphères est une nappe, la sélection d'un point dans ladite nappe correspondant à la position de l'objet à localiser (O4) étant le point parmi ceux de la nappe dont la distance au troisième objet de référence (O3) est la plus proche de la valeur d'un rayon de l'orbite (Orb3) dudit troisième objet de référence (O3).

7. Procédé selon l'une quelconque des revendications 4 à 6, **caractérisé en ce que** les au moins deux orbites parmi les trois orbites calculés (Orb1-Orb3) sont évaluées avec une incertitude relative, le procédé comporte l'étape de minimiser sous contrainte l'écart entre les distances des points situés dans une intersection de au moins deux orbites (Orb1, Orb2) par rapport au troisième objet de référence (O3) et la valeur prise par la distance de ces points au troisième objet de référence (O3).

8. Procédé selon la revendication 7, **caractérisé en ce que** dans le cas d'une flotte (F) d'objets situés dans un plan, une des méthodes de minimisation sous contrainte consiste à calculer une intersection de cercles médian de chaque anneau constituant les positions potentielles occupées par l'objet à localiser (O4), le rayon du cercle médian étant défini comme une moyenne historique de rayons mesurés, ayant écarté des valeurs exceptionnelles.

9. Procédé selon la revendication 8, **caractérisé en ce que** les valeurs exceptionnelles sont écartées suivant la méthodologie itérative suivante :

 - calculer un rayon moyen absolu à partir des mesures réalisées pour estimer la distance à l'objet à localiser (O4),
 - écarter, en tenant compte d'une pondération affectée à chacune des mesures en fonction d'une qualité de signal permettant la mesure associée, les mesures dont les écarts types sont supérieurs à un seuil, et
 - recalculer un rayon moyen relatif sur la base des valeurs restantes.

10. Procédé selon l'une quelconque des revendications 1 à 9, **caractérisé en ce qu'**il comporte un processus itératif d'élimination des objets de référence (O1-O3) utilisés pour débuter un processus de localisation dynamique de la flotte (F).

11. Procédé selon la revendication 10, **caractérisé en ce que** la localisation d'un cinquième objet communicant (O5) est effectuée par le quatrième objet localisé (O4) et deux des objets de référence (O1-O3).

12. Procédé selon la revendication 11, **caractérisé en ce que** la localisation d'un sixième objet communicant (O6) est effectuée à partir d'un seul objet de référence (O3) et des quatrième (O4) et cinquième (O5) objets communicants dont la localisation est connue.

13. Procédé selon la revendication 12, **caractérisé en ce que** la localisation des objets communicants subséquents est effectuée par tout ou partie des objets dont les coordonnées sont connues, et qui préférentiellement figurent parmi les objets nouvellement localisés différents des objets de référence (O1-O3) initialement utilisés pour débuter le procédé.

14. Procédé selon l'une quelconque des revendications 1 à 13, **caractérisé en ce que** le quatrième objet communicant (O4) est localisé à partir de la mesure par seulement deux objets communicants de référence (O1-O3) lorsqu'une position potentielle du quatrième objet communicant (O4' et O4") se trouve à l'extérieur d'une zone de détection (ZD) définie par une portée maximum (P) de détection des objets communicants de la flotte.

15. Procédé selon la revendication 1, **caractérisé en ce qu'**une distribution dans le temps des instants d'échantillonnage (Ii) est linéaire sur l'intervalle (Ve) et régit la détermination de tous les instants (Ii).

**Patentansprüche**

1. Verfahren zur Lokalisierung von eine Flotte bildenden kommunizierenden Objekten (O1-ON), umfassend die folgenden Schritte:

 i - Definieren eines absoluten Bezugssystems (Rep), in welchem Koordinaten der Stellungen der kommunizierenden Objekte (O1-ON) definiert sein werden,

 - Bestimmen einer Stellung von drei kommunizierenden Objekten (O1-O3) im absoluten Bezugssystem (Rep)

ii - unter Definierung von mindestens drei bekannten Stellungen (P1-P3) mit ihren Koordinaten im absoluten Bezugssystems (Rep) und

iii - unter Assoziieren der bekannten, vorher definierten Stellungen (P1-P3) mit den drei kommunizierenden Objekten (O1-O3), sogenannten Referenzobjekten,

iv - Erfassen, durch das mindestens eine der Referenzobjekte (O1-O3), der beiden anderen Referenzobjekte,

v - Messen, durch zumindest einen der Referenzobjekte (O1-O3), des Abstands von mindestens einem der Referenzobjekte (O1-O3) zu den anderen beiden Referenzobjekten,

vi - Messen des Abstands von mindestens zwei Referenzobjekte (O1-O3) zu einem vierten kommunizierenden Objekt (O4), wobei die geometrische Ortskurve der Punkte eines Referenzobjekts zum zu lokalisierenden Objekt (04) als Bahnkurve (Orb1-Orb3) des betreffenden Referenzobjekt bezeichnet ist und

vii - lokalisieren, durch wenigstens ein kommunizierendes Objekt (O1-O3), des vierten kommunizierenden Objekts (O4) aus den mindestens zwei zuvor bestimmten Bahnkurven (Orb1-Orb3) und mindestens einem Abstand unter den Abständen zwischen den drei Referenzobjekten,

**dadurch gekennzeichnet, dass** eine Länge (L) der Flotte (F) grösser als der Erfassungsbereich (P) der kommunizierenden Objekte (O1-ON) ist, ein gegebenes kommunizierendes Objekt (Oi) mit seiner unmittelbaren Umgebung der kommunizierenden Objekte Identitätsdaten und Lokalisierungsdaten austauscht, wobei die Objekte in der unmittelbaren Umgebung des gegebenen Objekts (Oi) dann die Daten an all kommunizierenden Objekten in ihren unmittelbaren Umgebung übertragen, und so weiter bis jedes kommunizierenden Objekt der Flotte (F) über eine Kenntnis aller kommunizierenden Objekte (O1-ON) der Flotte (F) verfügt, und dass

- mindestens ein kommunizierendes Objekt unter den drei Referenzobjekten, sogenanntes Lokalisierungsobjekt (Oloc), das vierte kommunizierende Objekt (O4) lokalisiert,

- wobei das Verfahren den Schritt des Bestimmens einer Trajektorie eines Objekts (Op) der Flotte aus einem Sampling-Intervall (Ve) umfasst, welches als das Zeitintervall zwischen einer Anfangszeitpunkt (I0) und einer Endzeitpunkt (IF) definiert ist, wobei die Zeit in M Zeitpunkte (Ii) unterteilt wird, bei den die Lokalisierung des kommunizierenden Objekts (Op) berechnet wird, dessen Trajektorie bestimmt werden soll,

- das lokalisierende Objekt (Oloc), welches aus den Objekten in seiner durch einen maximalen Erfassungsbereich (P) definierten Erfassungszone die Kenntnis der anderen Objekte der Flotte sowie deren Stellungen empfängt, unter diesen die Objekte bestimmt, die ihre Abstand zum Objekt messen können, dessen Trajektorie an dem betreffenden Sampling-Zeitpunkt bestimmt werden soll, und mindestens zwei Referenzobjekte unter diesen Objekten auswählt, um die Lokalisierung des zu lokalisierenden Objekts zu dieser Sampling-Zeitpunkt (Ii) durchzuführen,

- die Auswahl der mindestens zwei Referenzobjekte unter diesen Objekten zum Durchführen der Lokalisierung des Objekts zu dieser Sampling-Zeitpunkt (Ii) durch Zwangsverwendung einer Liste von Objekten durchgeführt wird, deren Lokalisierung dem lokalisierenden Objekt (Oloc) zum betreffenden Sampling-Zeitpunkt bekannt ist.

2. Verfahren nach Anspruch 1, **dadurch gekennzeichnet, dass** beim Implementieren des Verfahrens zur Lokalisierung des vierten Objekts (O4) nur die Stellungen der zur Lokalisierung des Objekts (O4) verwendeten Referenzobjekte definiert werden sollen, wobei die Stellungen der Referenzobjekte (O1-O3), vor und/oder nach dem Zeitpunkt der Lokalisierung des zu lokalisierenden kommunizierenden Objekts (04) unbekannt bleiben können.

3. Verfahren nach Anspruch 1, **dadurch gekennzeichnet, dass** das lokalizierende Objekt (Oloc) von den beiden anderen Geolokalisierungsreferenzobjekte die Abstände zwischen dem zu lokalisierenden Objekt (O4) und jedem dieser beiden anderen Geolokalizierungsreferenzobjekte empfängt.

4. Verfahren nach einem der Ansprüche 1 bis 3, **dadurch gekennzeichnet, dass** die Lokalisierung durch Berechnen der Kreuzung von mindestens zwei Bahnkurven des Objekts (O4) aus der Sicht von zwei Objekten unter den drei Referenzobjekte (O1-O3) erhalten wird.

5. Verfahren nach Anspruch 4, **dadurch gekennzeichnet, dass** bei einer Flotte (F) von Objekten in einer Ebene eine Kreuzung der Bahnkurven von zwei Objekte (O1, O2) unter den drei Referenzobjekten (O1-O3) aus zwei Punkten (O4', O4") besteht, wobei die Auswahl des der Stellung des zu lokalisierenden Objekts (O4) entsprechenden Punkts der Punkt unter diesen beiden Punkten (O4', O4") ist, deren Abstand zum dritten Referenzobjekt (O3) am nächsten zum Wert eines Radius der Bahnkurve (Orb3) dieses dritten Objekts (O3) ist.

**6.** Verfahren nach Anspruch 4, **dadurch gekennzeichnet, dass** bei einer Flotte (F) von Objekten mit unterschiedlicher Höhe eine geometrischen Ortskurve des zu lokalisierenden Objekts (O4) aus der Sicht von zwei Objekten (O1, O2) unter den drei Referenzobjekten (O1-O3) eine Kugel ist, eine Kreuzung dieser zwei Kugeln eine Schale ist, die Auswahl eines Punkts in der Schale entsprechend der Stellung des zu lokalisierenden Objekts (O4) der Punkt unter den der Schale ist, dessen Abstand zum dritten Referenzobjekt (O3) am nächsten zum Wert eines Radius der Bahnkurve (Orb3) dieses dritten Objekts (O3) ist.

**7.** Verfahren nach einem der Ansprüche 4 bis 6, **dadurch gekennzeichnet, dass** die mindestens zwei Bahnkurven unter den drei berechneten Bahnkurven (Orb1-Orb3) mit einer relativen Unsicherheit bewertet werden, das Verfahren den Schritt des Zwangsminimierens der Differenz zwischen den Abständen der Punkte an einer Kreuzung von mindestens zwei Bahnkurven (Orb1, Orb2) relativ zu dem dritten Referenzobjekt (O3) und dem Wert des Abstands von diesen Punkten zum dritten Bezugsobjekt (O3) umfasst.

**8.** Verfahren nach Anspruch 7, **dadurch gekennzeichnet, dass** bei einer Flotte (F) von Objekten in einer Ebene eine der Methoden zum Zwangsminimieren darin besteht, eine Kreuzung von Mediankreisen jedes die potentiellen Stellungen des zu lokalisierenden Objekts (O4) bildenden Rings zu berechnen, wobei der Radius des Mediankreises als ein historischer Durchschnitt von gemessenen Radien mit Ausschluss von außergewöhnlichen Werten definiert ist.

**9.** Verfahren nach Anspruch 8, **dadurch gekennzeichnet, dass** die außergewöhnlichen Werten sind gemäß der folgenden iterativen Methodik ausgeschlossen, umfassend:

- die Berechnung eines absoluten Durchschnittsradius aus den Messungen zum Schätzen des Abstands zum zu lokalisierenden Objekt (O4),
- den Ausschluss der Messungen mit größeren Standardabweichungen als einem Schwellenwert unter Berücksichtigung einer zu jedem der Messungen zugeordneten Gewichtung entsprechend einer die zugehörige Messung ermöglichenden Signalqualität, und
- die Neuberechnung eines relativen Durchschnittsradius basierend auf den verbleibenden Werten.

**10.** Verfahren nach einem der Ansprüche 1 bis 9, **dadurch gekennzeichnet, dass** es einen iterativen Prozess zur Eliminierung der Referenzobjekte (O1-O3) umfasst, die zum Starten eines dynamischen Lokalisierungsprozesses für die Flotte (F) verwendet werden.

**11.** Verfahren nach Anspruch 10, **dadurch gekennzeichnet, dass** die Lokalisierung eines fünften kommunizierenden Objekts (O5) von dem vierten lokalisierten Objekt (O4) und zwei der Referenzobjekte (O1-O3) durchgeführt wird.

**12.** Verfahren nach Anspruch 11, **dadurch gekennzeichnet, dass** die Lokalisierung eines sechsten kommunizierenden Objekts (O6) von nur einem Referenzobjekt (O3) und einem vierten (O4) und einem fünften (O5) kommunizierenden Objekt mit einer bekannten Lokalisierung durchgeführt wird.

**13.** Verfahren nach Anspruch 12, **dadurch gekennzeichnet, dass** die Lokalisierung der nachfolgenden kommunizierenden Objekte von allen oder Teil der Objekte mit bekannten Koordinaten durchgeführt wird, welche vorzugsweise unter den neu lokalisierten, von den Referenzobjekten (O1-O3) verschiedenen und ursprünglich zum Starten des Prozesses verwendeten Objekten erscheinen.

**14.** Verfahren nach einem der Ansprüche 1 bis 13, **dadurch gekennzeichnet, dass** das vierte kommunizierende Objekt (O4) aus der Messung durch nur zwei kommunizierende Referenzobjekte (O1-O3) lokalisiert wird, wenn sich eine potentielle Stellung des viertes kommunizieren Objektes (O4' und O4") außerhalb einer durch eine maximaler Erfassungsbereich (P) für die kommunizierenden Objekte der Flotte definierten Erfassungszone (ZD) befindet.

**15.** Verfahren nach Anspruch 1, **dadurch gekennzeichnet, dass** eine Zeitverteilung der Sampling-Zeitpunkte (Ii) im Intervall (Ve) linear ist, und die Bestimmung aller Zeitpunkte (Ii) steuert.

**Claims**

**1.** Method for locating communicating objects (O1-ON) forming a fleet, said method comprising the following steps of:

i - defining an absolute reference (Rep) in which coordinates of the positions of the communicating objects (O1-ON) will be defined,

- determining a position of three communicating objects (O1-O3) in said absolute reference (Rep)

ii - by defining at least three known positions (P1-P3) by their coordinates in the absolute reference (Rep), and
iii - by associating with the three communicating objects (O1-O3), called reference objects, the known positions (P1-P3) defined previously,
iv - causing the at least one of the reference objects (O1-O3) to detect the other two reference objects,
v - causing the at least one of the reference objects (O1-O3) to measure the distance from at least one of the reference objects (O1-O3) to the other two reference objects,
vi - measuring the distance from at least two reference objects (O1-O3) to a fourth communicating object (04), the geometric locus of the points of a reference object from the object (O4) to be located being called the orbit (Orb1-Orb3) of the reference object under consideration, and
vii - causing at least one communicating object (O1-O3) to locate the fourth communicating object (O4) from the at least two orbits (Orb1-Orb3) previously determined and at least one distance among the distances separating the three reference objects,

**characterized in that** a length (L) of the fleet (F) is superior to the detection range (P) of the communicating objects (O1-ON), a given communicating object (Oi) exchanges identity data and location data with its immediate environment of communicating objects, objects in the immediate environment of the given object (Oi) then passing said data on all the communicating objects in their immediate environment, and so on until each communicating object of the fleet (F) has a knowledge of all the communicating objects (O1-ON) of the fleet (F), and **in that**

- at least one communicating object among the three reference objects, called locating object (Oloc), locates the fourth communicating object (O4),
- said method comprising the step of determining a trajectory of a communicating object (Op) belonging to the fleet, from an sampling interval (Ve), defined as the time interval between an initial time (10) and a final time (IF), wherein the time is sampled into M times (Ii) when the location of the communicating object (Op), whose trajectory is to be determined, will be calculated,
- the locating object (Oloc) receiving, from the objects present in its detection zone defined by a maximum detection range (P), the knowledge of the other objects in the fleet as well as their position, determines among them the objects capable of measuring their distance from the object whose trajectory is to be determined at the relevant sampling time, and chooses at least two reference objects among these objects so as to perform the location of the object to be located, at this sampling time (Ii),
- the choice of the at least two reference objects among these objects to perform the location of the object to be located, at this sampling time (Ii), is imposed by a list of objects of which the localizing object (Oloc) knows the location at the relevant sampling time.

2. Method according to claim 1, **characterized in that**, when implementing the method of locating the fourth object (O4), only the positions of the reference objects used to locate said object (O4) are to be defined, wherein the positions of said reference objects (O1-O3), before and/or after the location of the communicating object to be located (O4), can remain unknown.

3. Method according to claim 1, **characterized in that** the locating object (Oloc) receives, from the other two geolocation reference objects, the distances between the object (O4) to be located and each of these two other geolocation reference objects.

4. Method according to one of the claims 1 to 3, **characterized in that** the location is obtained by calculating the intersection of at least two orbits of the object (O4) to be located from the point of view of two objects among the three reference objects (O1-O3).

5. Method according to claim 4 , **characterized in that**, in the case of a fleet (F) of objects in a plane, an intersection of the orbits of two objects (O1, O2) among the three reference objects (O1-O3) is composed of two points (O4', O4"), the selection of the point corresponding to the position of the object (O4) to be located being the point among these two (O4', O4") whose distance to the third reference object (O3) is closest to the value of a radius of the orbit (Orb3) of this third object (O3).

6. Method according to claim 4, **characterized in that**, in the case of a fleet (F) of objects of different altitudes, a geometric locus of the object (O4) to be located from the point of view of two objects (O1, O2) among the three reference objects (O1-O3) is a sphere, an intersection of these two spheres is a nappe, the selection of a point in said nappe corresponding to the position of the object (O4) to be located being the point among those of the nappe whose distance to the third reference object (O3) is the closer to the value of a radius of the orbit (Orb3) of said third reference object (O3).

7. Method according to any one of the claims 4 to 6, **characterized in that** the at least two orbits among the three calculated orbits (Orb1-Orb3) are evaluated with a relative uncertainty, the method includes the step of minimizing under constraint the difference between the distances of the points at an intersection of at least two orbits (Orb1, Orb2) relative to the third reference object (O3) and the value of the distance from these points to the third reference object (O3).

8. Method according to claim 7, **characterized in that**, in the case of a fleet (F) of objects in a plane, one of the methods of minimization under constraint consists of calculating an intersection of median circles of each ring constituting the potential positions of the object (O4) to be located, the radius of the median circle being defined as a historical average of measured radii, exceptional values being rejected.

9. Method according to claim 8, **characterized in that** the exceptional values are excluded according to the following iterative methodology:

- calculating an absolute average radius from the measurements for estimating the distance to the object (O4) to be located,
- rejecting measures whose standard deviations are superior to a threshold, while taking into account a weighting assigned to each of the measurements according to a signal quality allowing the associated measurement, and
- recalculating a relative average radius based on the remaining values.

10. Method according to any one of the claims 1 to 9, **characterized in that** it comprises an iterative process of eliminating the reference objects (O1-O3) used to start a dynamic location process for the fleet (F).

11. Method according to claim 10, **characterized in that** the location of a fifth communicating object (O5) is performed by the fourth located object (O4) and two of the reference objects (O1-O3).

12. Method according to claim 11, **characterized in that** the location of a sixth communicating object (O6) is performed from only one reference object (O3) and fourth (O4) and fifth (O5) communicating objects whose location is known.

13. Method according to claim 12, **characterized in that** the location of subsequent communicating objects is carried out by all or part of the objects whose coordinates are known, and which preferentially appear among the newly located objects, which are different from the reference objects (O1-O3) initially used to start the process.

14. Method according to any one of claims 1 to 13, **characterized in that** the fourth communicating object (O4) is located from the measurement by only two communicating reference objects (O1-O3) when a potential position of the fourth communicating object (O4' and O4") is outside a detection zone (ZD) defined by a maximum detection range (P) of the communicating objects of the fleet.

15. Method according to claim 1, **characterized in that** time distribution of the sampling times (Ii) is linear in the interval (Ve) and governs the determination of all the times (Ii).

**Fig.1**

| Objet | X | Y |
|-------|-----|-----|
| O1 | 20 | 30 |
| O2 | -30 | 10 |
| O3 | 40 | -20 |
| O4 | / | / |

**Fig.2**

| Objet | X | Y | Orbi |
|-------|-----|-----|-------|
| O1 | 20 | 30 | 30 |
| O2 | -30 | 10 | 40 |
| O3 | 40 | -20 | 38.20 |
| O4 | / | / | |

| Objet | X | Y | Orbi |
|-------|-----|-----|-------|
| O1 | 20 | 30 | 30 |
| O2 | -30 | 10 | 40 |
| O3 | 40 | -20 | 38.20 |
| O4 | / | / | |

**Fig.3**

| Etape | Etat | Action |
|-------|------|--------|
| E1 | Les localisations de 01,02,03 sont connues | 04 est localisé par 01,02,03 |
| E2 | Les localisations de 01,02,03,04 sont connues | 05 est localisé par 02,03,04 (01 est eliminé du procédé) |
| E3 | Les localisations de 01 à 05 sont connues | 06 est localisé par 03,04,05 (01 et 02 sont éliminés du procédé) |
| E4 | Les localisations de 01 à 06 sont connues | 07 est localisé par 04,05,06 (01, 02 et 03 sont eliminés du procédé) La phase d'initialisation est achevée. |

**Fig.4**

Y

F

A l'instant Ip+1

0 — X

F

Dmax

$O_N$

$O_M$  $O_{N+1}$

$O_3$

$O_1$  $O_2$

A l'instant Ip

ZD

P

$O4'$ ou
$O4''$

L

**Fig.5**

IO                                                                    IF

Ve

Te

I1        I2        I3        I4        I5        I6

**Fig.6a**

IO                                                                    IF

T0i

Ve

Ve'

I1              I2 I3 I4 I5 I6        I7        I8        I9

**Fig.6b**

A l'instant $I_p$

$O_n(Ip)$

$\times O_{n+2}(Ip)$

$O_p(Ip)$

$O_{n+1}(Ip)$

A l'instant $I_p+1$

$O_n(Ip+1)$

$\times O_{n+2}(Ip+1)$

$O_p(Ip)$

$O_p(Ip+1)$

$O_{n+1}(Ip+1)$

A l'instant $I_p+2$

$O_{n+2}(Ip+2)$

$O_n(Ip+2)$

$O_p(Ip)$

$O_p(Ip+2)$

$O_p(Ip+1)$

$O_{n+1}(Ip+2)$

**Fig.7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007005292 A
- WO 2007072400 A
- US 2013045750 A
- US 2009201850 A